# EUROPÄISCHE PATENTSCHRIFT

(11) **EP 4 230 890 B1**
(45) Veröffentlichungstag und Bekanntmachung des Hinweises auf die Patenterteilung: **15.01.2025**
(21) Anmeldenummer: 23156595.3
(22) Anmeldetag: 14.02.2023
(51) Int. Cl.: F16D 11/14

(54) **KUPPLUNGSEINRICHTUNG**
COUPLING DEVICE
DISPOSITIF D'ACCOUPLEMENT

(30) Priorität: 16.02.2022 DE 102022201598
(43) Veröffentlichungstag der Anmeldung: 23.08.2023
(73) Patentinhaber: ZF Friedrichshafen AG, 88046 Friedrichshafen (DE)
(72) Erfinder: Pfeffer, Andreas, 94234 Viechtach (DE)

(56) Entgegenhaltungen:
- US-A1- 2002 112 934
- US-A1- 2013 334 000

## Beschreibung

Die Erfindung bezieht sich auf eine Kupplungseinrichtung mit einer eine radial umlaufende erste axiale Zahnung aufweisenden Welle und einer eine entsprechende radial umlaufende zweite axiale Zahnung aufweisenden Muffe, wobei Welle und Muffe koaxial zueinander um eine Achse drehbar angeordnet sind und wobei Welle oder Muffe zum Ineingriff der radial umlaufenden ersten axialen Zahnung der Welle in die radial umlaufende zweite axiale Zahnung der Muffe und zum Außereingriff der radial umlaufenden ersten axialen Zahnung der Welle aus der radial umlaufenden zweiten axialen Zahnung der Muffe um einen Verstellweg axial bewegbar ist.

Die US 2002/112934 A1 offenbart einen Nabenkupplungsmechanismus, bei dem die Betätigung der Kupplungsringbewegung durch eine Übertotpunktfeder erfolgt. Ein erster Federabschnitt ist am Kupplungsring befestigt und ein zweiter Federabschnitt ist beweglich in der Mitte des Kupplungsrings befestigt. Der zweite Federabschnitt ist axial vom ersten Federabschnitt versetzt und spannt den Kupplungsring vom ersten Federabschnitt weg vor. Anschläge beschränken die Bewegung des ersten und zweiten Federabschnitts, was eine Beweglichkeit des zweiten Federabschnitts von einer Seite des ersten Federabschnitts zur anderen ermöglicht und dadurch eine umgekehrte axiale Bewegung des Kupplungsrings erzwingt.

Aus der US 2013/334000 A1 ist eine Verbindungsvorrichtung zur drehfesten Verbindung einer ersten und einer zweiten relativ zueinander drehbaren Welle bekannt. Die Verbindungsvorrichtung weist ein axial bewegbares Verbindungselement mit Formschlusselementen auf, das in einer ersten Axialposition mittels der Formschlusselemente einen Formschluss zwischen der ersten und der zweiten Welle herstellt und in einer zweiten Axialposition den Formschluss auflöst. Die Verbindungsvorrichtung weist auch einen elektromagnetischen Aktor auf, welcher bei elektrischer Bestromung eine Bewegung des Verbindungselementes zwischen der ersten und der zweiten Axialposition bewirkt. Die Formschlusselemente sind in axialer Bewegungsrichtung des Verbindungselementes in mehreren voneinander beabstandeten ersten Reihen angeordnet, so, dass sich in der ersten Axialposition diese mehreren ersten Reihen mit jeweils zumindest einer korrespondierenden zweiten Reihe von Formschlusselementen der ersten Welle in Formschluss befinden, wodurch der Formschluss zwischen der ersten und der zweiten Welle hergestellt ist und dass in der zweiten Axialposition diese mehreren ersten Reihen mit der jeweils korrespondierenden zweiten Reihe von Formschlusselementen der ersten Welle gelöst sind, wodurch der Formschluss zwischen der ersten und der zweiten Welle aufgelöst ist.

Bei derartigen bekannten Kupplungseinrichtungen ist das zulässige übertragbare Drehmoment begrenzt.

Aufgabe der Erfindung ist es eine Kupplungseinrichtung der eingangs genannten Art zu schaffen, die einen einfachen Aufbau mit geringer Baulänge und geringer radialer Erstreckung aufweist sowie ein großes Drehmoment übertragen kann.

Diese Aufgabe wird erfindungsgemäß dadurch gelöst, daß die Welle in einem axialen Abstand zur radial umlaufenden ersten axialen Zahnung eine radial umlaufende dritte axiale Zahnung aufweist, wobei die Zähne der radial umlaufenden ersten Zahnung und der radial umlaufenden dritten Zahnung axial zueinander ausgerichtet sind und die Muffe in demselben axialen Abstand zur radial umlaufenden zweiten axialen Zahnung eine radial umlaufende vierte axiale Zahnung aufweist und die Zähne der radial umlaufenden zweiten axialen Zahnung und der radial umlaufenden vierten axialen Zahnung axial zueinander ausgerichtet sind, wobei der axiale Abstand zwischen radial umlaufenden erster und dritter axialer Zahnung mindestens der Breite der radial umlaufenden vierten axialen Zahnung entspricht und wobei in einer ersten Schaltposition alle Zahnungen außer Eingriff voneinander sind und in einer zweiten Schaltposition die radial umlaufenden erste axiale Zahnung in der radial umlaufenden zweiten axialen Zahnung sowie die radial umlaufenden dritte axiale Zahnung in der radial umlaufenden vierten axialen Zahnung in Eingriff ist.

Es versteht sich, daß entsprechend dem Zahnungspaar der radial umlaufenden dritten axialen Zahnung und der radial umlaufenden vierten axialen Zahnung auch noch weitere axiale Zahnungspaare vorhanden sein können.

Die erfindungsgemäße Anordnung führt bei relativ geringem Außendurchmesser und relativ geringer Länge der Kupplungseinrichtung sowie geringem axialen Verstellweg zu einer Erhöhung, insbesondere Verdoppelung des übertragbaren Drehmoments.

Der geringe Verstellweg ermöglicht ein schnelles Schalten der Kupplungseinrichtung.

Dies ist insbesondere von Vorteil, wenn die Kupplungseinrichtung ein Klauensperrsystem ist, das vorzugsweise bei Differentialgetrieben Anwendung finden kann.

Weisen die Zähne der radial umlaufenden ersten axialen Zahnung an ihren Zahnflanken erste Hinterlegungen auf, wobei die Zahnköpfe an ihren der radial umlaufenden zweiten axialen Zahnung zugewandten Enden eine geringere Breite aufweisen als an ihren der radial umlaufenden zweiten axialen Zahnung abgewandten Enden so kommt es in eingekuppelten Zustand und hohem zu übertragenden Drehmoment zu einer solchen Verformung der Zähne, daß deren Belastung insbesondere der Belastung der Zahnfüße sich über die ganze Breite der Zähne verteilt und so eine Überlastung der Zähne vermieden werden kann.

Erfindungsgemäß weisen die Zähne der radial umlaufenden zweiten axialen Zahnung an ihren Zahnflanken zweite Hinterlegungen auf, wobei die Zahnköpfe an ihren der radial umlaufenden ersten axialen Zahnung zugewandten Enden eine geringere Breite aufweisen als an ihren der radial umlaufenden ersten axialen Zahnung abgewandten Enden. Auch hier kommt es in eingekuppelten Zustand und hohem zu übertragenden Drehmoment zu einer solchen Verformung der Zähne, daß deren Belastung insbesondere der Belastung der Zahnfüße sich über die ganze Breite der Zähne verteilt und so eine Überlastung der Zähne vermieden werden kann.

Weiterhin führt diese Ausbildung dazu, daß sich die Zähne axial ausrichten können. Damit können Fluchtungsfehler der radial umlaufenden ersten und zweiten Zahnung zur radial umlaufenden dritten und vierten Zahnung aufgrund von Fertigungsfehlern egalisiert werden.

Die Hinterlegungen weisen nur einen geringen Winkel zur Achse auf, um die Welle und Muffe drehbar sind, damit die Zähne leicht entkoppelbar sind. Dabei kann der Winkel in der Größenordnung von 2,5° liegen.

Die ersten Hinterlegungen und/oder die zweiten Hinterlegungen und/oder die dritten Hinterlegungen und/oder die vierten Hinterlegungen können sich über die ganze Breite oder über einen Teil der Breite der Zähne erstrecken.

Um ein gutes Einkoppeln zu erreichen, können die den Zähnen der radial umlaufenden zweiten axialen Verzahnung zugewandten Stirnseiten der Zähne der radial umlaufenden ersten axialen Zahnung und/oder die den Zähnen der radial umlaufenden ersten axialen Verzahnung zugewandten Stirnseiten der Zähne der radial umlaufenden zweiten axialen Zahnung und/oder die den Zähnen der radial umlaufenden vierten axialen Verzahnung zugewandten Stirnseiten der Zähne der radial umlaufenden dritten axialen Zahnung und/oder die den Zähnen der radial umlaufenden dritten axialen Verzahnung zugewandten Stirnseiten der Zähne der radial umlaufenden vierten axialen Zahnung mit axial gerichteten Anspitzungen versehen sein.

Ein Ausführungsbeispiel der Erfindung ist in der Zeichnung dargestellt und wird im Folgenden näher beschrieben. Es zeigen
- Figur 1: eine Welle in der Seitenansicht
- Figur 2: eine Muffe in der Seitenansicht
- Figur 3: die Welle nach Figur 1 in Perspektivansicht
- Figur 4: die Muffe nach Figur 2 in Perspektivansicht

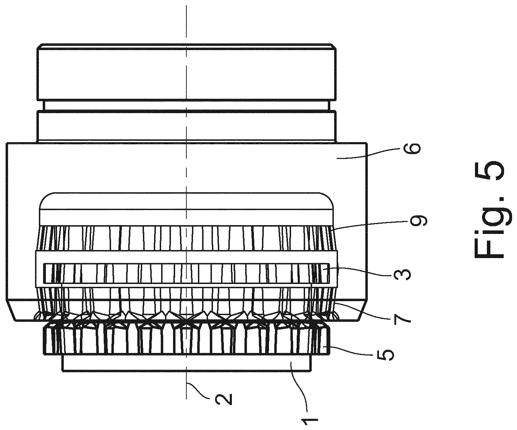

- Figur 5: eine vergrößerte Querschnittsdarstellung von der Welle nach Figur 1 teilweise eingekuppelt in die Muffe nach Figur 2.

Die in den Figuren dargestellte Welle 1 ist um eine Achse 2 drehbar gelagert. Die Welle 1 weist an ihren linken Endbereich eine erste radial umlaufende axiale Zahnung 3 und rechts dazu in einem axialen Abstand 4 zur ersten radial umlaufenden axialen Zahnung 3 eine dritte radial umlaufende axiale Zahnung 5 auf.

Der Durchmesser und die Zähnezahl der ersten radial umlaufenden axialen Zahnung 3 sowie der Durchmesser und die Zähnezahl der dritten radial umlaufenden axialen Zahnung 4 sind beispielsgemäß gleich.

Ebenfalls um die Achse 2 drehbar gelagert ist eine Muffe 6 angeordnet, die um einen Verstellweg 16 von einer ersten Schaltposition in eine zweite Schaltposition bewegbar ist.

Die Muffe 6 weist entsprechend der ersten radial umlaufenden axialen Zahnung 3 und der dritten radial umlaufenden axialen Zahnung 5 an ihrem linken, der Welle 1 zugewandten Endbereich eine vierte radial umlaufende axiale Zahnung 7 und in einem, dem Abstand 4 entsprechenden Abstand 8 eine zweite radial umlaufende axiale Zahnung 9 auf.

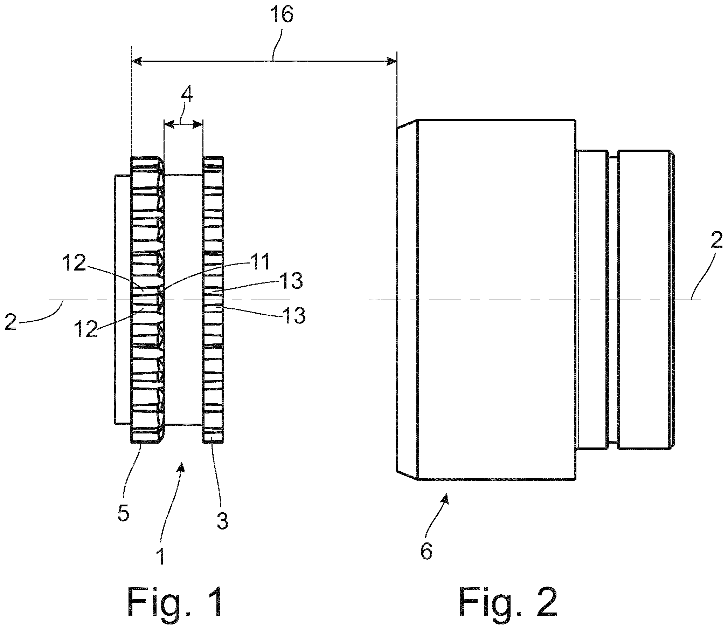

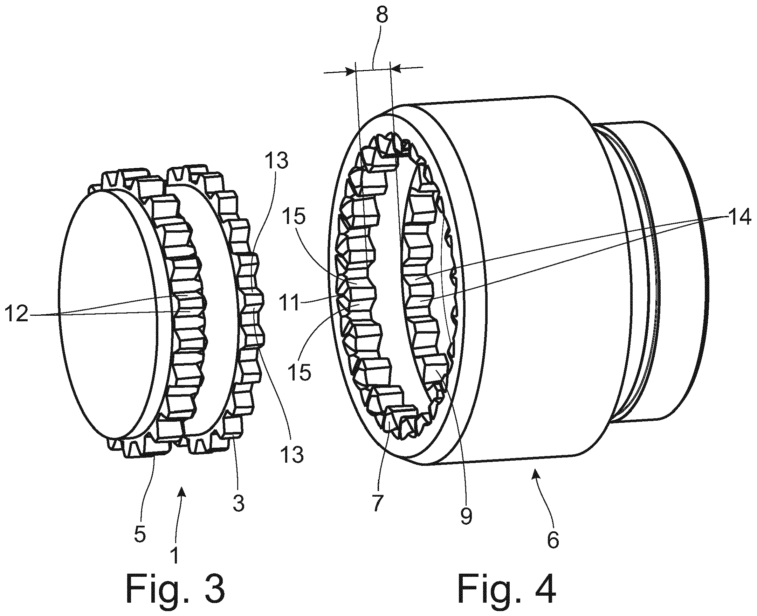

In der in Figur 1 dargestellten ersten Schaltposition befindet sich die Welle 1 außerhalb der Muffe 6. Durch axiales Zueinanderschieben von Welle 1 und Muffe 6 um den Verstellweg 16 in die in Figur 3 dargestellte zweite Schaltposition gelangt die erste radial umlaufenden axialen Zahnung 3 in Eingriff in die zweite radial umlaufende Zahnung 9 und die dritte radial umlaufende Zahnung 5 in die vierte radial umlaufende axiale Zahnung 7.

Damit bei diesem Einkuppelvorgang ein die Zähne der radial umlaufenden axialen Zahnungen 3 und 5 gut die Zahnlücken der radial umlaufenden axialen Zahnungen 9 und 7 finden und in diese eingleiten können, sind die stirnseitig einander zugewandten Zähne der dritten radialen umlaufenden axialen Zahnung 5 und der vierten radial umlaufenden axialen Zahnung 7 mit axial zueinander gerichteten Anspitzungen 10 und 11 versehen.

Die Zähne der dritten radial umlaufenden axialen Zahnung 5 der Welle 6 weisen an ihren Zahnflanken derart dritte Hinterlegungen 12 auf, daß ihre Zahnköpfe an ihren der Muffe 6 zugewandten Enden eine größere Breite aufweisen als an ihren der Muffe 6 abgewandten Enden.

Die Zähne der ersten radial umlaufenden axialen Zahnung 3 der Welle 6 weisen an ihren Zahnflanken derart erste Hinterlegungen 13 auf, daß ihre Zahnköpfe an ihren der Muffe 6 zugewandten Enden eine geringere Breite aufweisen als an ihren der Muffe 6 abgewandten Enden.

Die Zähne der vierten radial umlaufenden axialen Zahnung 7 der Muffe 6 weisen an ihren Zahnflanken derart vierte Hinterlegungen 15 auf, daß ihre Zahnköpfe an ihren der Welle 1 zugewandten Enden eine größere Breite aufweisen als an ihren der Welle 1 abgewandten Enden.

Die Zähne der zweiten radial umlaufenden axialen Zahnung 9 der Muffe 6 weisen an ihren Zahnflanken derart zweite Hinterlegungen 14 auf, daß ihre Zahnköpfe an ihren der Welle 1 zugewandten Enden eine geringere Breite aufweisen als an ihren der Welle 1 abgewandten Enden.

Die beschriebenen Hinterlegungen 12, 13, 14, 15 weisen einen Neigungswinkel zur Achse von 2,5° auf.

### Bezugszeichen

- 1: Welle
- 2: Achse
- 3: erste radial umlaufende Zahnung
- 4: Abstand
- 5: dritte radial umlaufende Zahnung
- 6: Muffe
- 7: vierte radial umlaufende Zahnung
- 8: Abstand
- 9: zweite radial umlaufende Zahnung
- 10: Anspitzungen
- 11: Anspitzungen
- 12: dritte Hinterlegungen
- 13: erste Hinterlegungen
- 14: zweite Hinterlegungen
- 15: vierte Hinterlegungen
- 16: Verstellweg

## Patentansprüche

1. Kupplungseinrichtung mit einer eine radial umlaufende erste axiale Zahnung (3) aufweisenden Welle (1) und einer eine entsprechende radial umlaufende zweite axiale Zahnung (9) aufweisenden Muffe (6), wobei Welle (1) und Muffe (6) koaxial zueinander um eine Achse (2) drehbar angeordnet sind,wobei Welle (1) oder Muffe (6) zum Ineingriff der radial umlaufenden ersten axialen Zahnung (3) der Welle (1) in die radial umlaufende zweite axiale Zahnung (9) der Muffe (6) und zum Außereingriff der radial umlaufenden ersten axialen Zahnung (3) der Welle (1) aus der radial umlaufenden zweiten axialen Zahnung (9) der Muffe (6) um einen Verstellweg (16) axial bewegbar ist, wobei die Welle (1) in einem axialen Abstand (4) zur radial umlaufenden ersten axialen Zahnung (3) eine radial umlaufende dritte axiale Zahnung (5) aufweist, wobei die Zähne der radial umlaufenden ersten Zahnung (3) und der radial umlaufenden dritten Zahnung (5) axial zueinander ausgerichtet sind und die Muffe (6) in demselben axialen Abstand (8) zur radial umlaufenden zweiten axialen Zahnung (9) eine radial umlaufende vierte axiale Zahnung (7) aufweist und die Zähne der radial umlaufenden zweiten axialen Zahnung (9) und der radial umlaufenden vierten axialen Zahnung (7) axial zueinander ausgerichtet sind, wobei der axiale Abstand (4) zwischen radial umlaufenden erster und dritter axialer Zahnung (3, 5) mindestens der Breite der radial umlaufenden vierten axialen Zahnung (7) entspricht und wobei in einer ersten Schaltposition alle Zahnungen außer Eingriff voneinander sind und in einer zweiten Schaltposition die radial umlaufenden erste axiale Zahnung (3) in der radial umlaufenden zweiten axialen Zahnung (9) sowie die radial umlaufenden dritte axiale Zahnung (5) in der radial umlaufenden vierten axialen Zahnung (7) in Eingriff ist, **dadurch gekennzeichnet, dass** die Zähne der radial umlaufenden ersten axialen Zahnung (3) an ihren Zahnflanken erste Hinterlegungen (13) aufweisen, wobei die Zahnköpfe an ihren der radial umlaufenden zweiten axialen Zahnung (9) zugewandten Enden eine geringere Breite aufweisen als an ihren der radial umlaufenden zweiten axialen Zahnung (9) abgewandten Enden.

2. Kupplungseinrichtung nach einem der vorhergehenden Ansprüche, **dadurch gekennzeichnet, dass** die Zähne der radial umlaufenden zweiten axialen Zahnung (9) an ihren Zahnflanken zweite Hinterlegungen (14) aufweisen, wobei die Zahnköpfe an ihren der radial umlaufenden ersten axialen Zahnung (3) zugewandten Enden eine geringere Breite aufweisen als an ihren der radial umlaufenden ersten axialen Zahnung (3) abgewandten Enden.

3. Kupplungseinrichtung nach einem der vorhergehenden Ansprüche, **dadurch gekennzeichnet, dass** die Zähne der radial umlaufenden dritten axialen Zahnung (5) an ihren Zahnflanken dritte Hinterlegungen (12) aufweisen, wobei die Zahnköpfe an ihren der radial umlaufenden vierten axialen Zahnung (7) zugewandten Enden eine größere Breite aufweisen als an ihren der radial umlaufenden vierten axialen Zahnung (7) abgewandten Enden.

4. Kupplungseinrichtung nach einem der vorhergehenden Ansprüche, **dadurch gekennzeichnet, dass** die Zähne der radial umlaufenden vierten axialen Zahnung (7) an ihren Zahnflanken vierte Hinterlegungen (15) aufweisen, wobei die Zahnköpfe an ihren der radial umlaufenden dritten axialen Zahnung (5) zugewandten Enden eine größere Breite aufweisen als an ihren der radial umlaufenden dritten axialen Zahnung (5) abgewandten Enden.

5. Kupplungseinrichtung nach einem der Ansprüche 2 bis 5, **dadurch gekennzeichnet, dass** die Hinterlegungen (12, 13, 14, 15) einen geringen Winkel in der Größenordnung von 2,5° zur Achse aufweisen.

6. Kupplungseinrichtung nach einem der vorhergehenden Ansprüche, **dadurch gekennzeichnet, dass** sich die ersten Hinterlegungen (13) und/oder die zweiten Hinterlegungen (14) und/oder die dritten Hinterlegungen (12) und/oder die vierten Hinterlegungen (15) über die die ganze Breite oder über einen Teil der Breite der Zähne erstrecken.

7. Kupplungseinrichtung nach einem der vorhergehenden Ansprüche, **dadurch gekennzeichnet, dass** die den Zähnen der zweiten axial umlaufenden Verzahnung (9) zugewandten Stirnseiten der Zähne der ersten axial umlaufenden Zahnung (3) und/oder die den Zähnen der radial umlaufenden ersten axialen Verzahnung (3) zugewandten Stirnseiten der Zähne der radial umlaufenden zweiten axialen Zahnung (9) und/oder die den Zähnen der radial umlaufenden vierten axialen Verzahnung (7) zugewandten Stirnseiten der Zähne der radial umlaufenden dritten axialen Zahnung (5) und/oder die den Zähnen der radial umlaufenden dritten axialen Verzahnung (5) zugewandten Stirnseiten der Zähne der radial umlaufenden vierten axialen Zahnung (7) mit axial gerichteten Anspitzungen (11) versehen sind.

## Claims

1. Coupling device having a shaft (1) which has a radially encircling first axial toothing (3), and a corresponding sleeve (6) which as a radially encircling second axial toothing (9), wherein the shaft (1) and the sleeve (6) are disposed so as to be rotatable in a mutually coaxial manner about an axis (2); wherein the shaft (1) or the sleeve (6) is able to be axially moved by an adjustment path (16) for engaging the radially encircling first axial toothing (3) of the shaft (1) in the radially encircling second axial toothing (9) of the sleeve (6), and for disengaging the radially encircling first axial toothing (3) of the shaft (1) from the radially encircling second axial toothing (9) of the sleeve (6); wherein the shaft (1) has a radially encircling third axial toothing (5) at an axial spacing (4) from the radially encircling first axial toothing (3); wherein the teeth of the radially encircling first toothing (3) and of the radially encircling third toothing (5) are axially mutually aligned, and the sleeve (6) has a radially encircling fourth axial toothing (7) at the same axial spacing (8) from the radially encircling second axial toothing (9), and the teeth of the radially encircling second axial toothing (9) and of the radially encircling fourth axial toothing (7) are axially mutually aligned; wherein the axial spacing (4) between the radially encircling first and third axial toothing (3, 5) corresponds to at least the width of the radially encircling fourth axial toothing (7); and wherein in a first shifting position all toothings are disengaged from one another, and in a second shifting position the radially encircling first axial toothing (3) engages in the radially encircling second axial toothing (9), and the radially encircling third axial toothing (5) engages in the radially encircling fourth axial toothing (7), **characterized in that** the teeth of the radially encircling first axial toothing (3) on their tooth flanks have first backings (13), wherein the tips of the teeth on their ends that face the radially encircling second axial toothing (9) have a smaller width than on their ends that face away from the radially encircling second axial toothing (9).

2. Coupling device according to one of the preceding claims, **characterized in that** the teeth of the radially encircling second axial toothing (9) on their tooth flanks have second backings (14), wherein the tips of the teeth on their ends that face the radially encircling first axial toothing (3) have a smaller width than on their ends that face away from the radially encircling first axial toothing (3).

3. Coupling device according to one of the preceding claims, **characterized in that** the teeth of the radially encircling third axial toothing (5) on their tooth flanks have third backings (12), wherein the tips of the teeth on their ends that face the radially encircling fourth axial toothing (7) have a larger width than on their ends that face away from the radially encircling fourth axial toothing (7) .

4. Coupling device according to one of the preceding claims, **characterized in that** the teeth of the radially encircling fourth axial toothing (7) on their tooth flanks have fourth backings (15), wherein the tips of the teeth on their ends that face the radially encircling third axial toothing (5) have a larger width than on their ends that face away from the radially encircling third axial toothing (5).

5. Coupling device according to one of Claims 2 to 5, **characterized in that** the backings (12, 13, 14, 15) have a minor angle in the order of 2.5° in relation to the axis.

6. Coupling device according to one of the preceding claims, **characterized in that** the first backings (13) and/or the second backings (14) and/or the third backings (12) and/or the fourth backings (15) extend across the entire width or across part of the width of the teeth.

7. Coupling device according to one of the preceding claims, **characterized in that** those end sides of the teeth of the first axially encircling toothing (3) that face the teeth of the second axially encircling toothing (9), and/or those end sides of the teeth of the radially encircling second axial toothing (9) that face the teeth of the radially encircling first axial toothing (3), and/or those end sides of the teeth of the radially encircling third axial toothing (5) that face the teeth of the radially encircling fourth axial toothing (7), and/or those end sides of the teeth of the radially encircling fourth axial toothing (7) that face the teeth of the radially encircling third axial toothing (5) are provided with axially directed bevels (11).

## Revendications

1. Dispositif d'accouplement avec un arbre (1) présentant une première denture axiale radialement périphérique (3) et un manchon (6) présentant une deuxième denture axiale radialement périphérique (9) correspondante, l'arbre (1) et le manchon (6) étant agencés de manière à pouvoir tourner coaxialement l'un par rapport à l'autre autour d'un axe (2), l'arbre (1) ou le manchon (6) pouvant être déplacé axialement sur une course de réglage (16) pour l'engagement de la première denture axiale radialement périphérique (3) de l'arbre (1) dans la deuxième denture axiale radialement périphérique (9) du manchon (6) et pour le désengagement de la première denture axiale radialement périphérique (3) de l'arbre (1) de la deuxième denture axiale radialement périphérique (9) du manchon (6), l'arbre (1) présentant, à une distance axiale (4) de la première denture axiale radialement périphérique (3), une troisième denture axiale radialement périphérique (5), les dents de la première denture radialement périphérique (3) et de la troisième denture radialement périphérique (5) étant orientées axialement les unes par rapport aux autres et le manchon (6) présentant, à la même distance axiale (8) de la deuxième denture axiale radialement périphérique (9), une quatrième denture axiale radialement périphérique (7) et les dents de la deuxième denture axiale radialement périphérique (9) et de la quatrième denture axiale radialement périphérique (7) étant orientées axialement les unes par rapport aux autres, la distance axiale (4) entre la première et la troisième denture axiale radialement périphérique (3, 5) correspondant au moins à la largeur de la quatrième denture axiale radialement périphérique (7), et dans une première position de commutation, toutes les dentures étant désengagées les unes des autres et dans une deuxième position de commutation, la première denture axiale radialement périphérique (3) étant engagée dans la deuxième denture axiale radialement périphérique (9) et la troisième denture axiale radialement périphérique (5) étant engagée dans la quatrième denture axiale (7) tournant radialement, **caractérisé en ce que** les dents de la première denture axiale radialement périphérique (3) présentent sur leurs flancs de dent des premières contre-dépouilles (13), les têtes de dent présentant à leurs extrémités tournées vers la deuxième denture axiale radialement périphérique (9) une largeur plus faible qu'à leurs extrémités détournées de la deuxième denture axiale radialement périphérique (9).

2. Dispositif d'accouplement selon l'une quelconque des revendications précédentes, **caractérisé en ce que** les dents de la deuxième denture axiale radialement périphérique (9) présentent sur leurs flancs de dent des deuxièmes contre-dépouilles (14), les têtes de dent présentant à leurs extrémités tournées vers la première denture axiale radialement périphérique (3) une largeur plus faible qu'à leurs extrémités détournées de la première denture axiale radialement périphérique (3).

3. Dispositif d'accouplement selon l'une quelconque des revendications précédentes, **caractérisé en ce que** les dents de la troisième denture axiale radialement périphérique (5) présentent sur leurs flancs de dent des troisièmes contre-dépouilles (12), les têtes de dent présentant à leurs extrémités tournées vers la quatrième denture axiale radialement périphérique (7) une largeur plus grande qu'à leurs extrémités détournées de la quatrième denture axiale radialement périphérique (7).

4. Dispositif d'accouplement selon l'une quelconque des revendications précédentes, **caractérisé en ce que** les dents de la quatrième denture axiale radialement périphérique (7) présentent sur leurs flancs de dent des quatrièmes contre-dépouilles (15), les têtes de dent présentant à leurs extrémités tournées vers la troisième denture axiale radialement périphérique (5) une largeur plus grande qu'à leurs extrémités détournées de la troisième denture axiale radialement périphérique (5).

5. Dispositif d'accouplement selon l'une quelconque des revendications 2 à 5, **caractérisé en ce que** les contre-dépouilles (12, 13, 14, 15) présentent un angle faible, de l'ordre de 2,5°, par rapport à l'axe.

6. Dispositif d'accouplement selon l'une quelconque des revendications précédentes, **caractérisé en ce que** les premières contre-dépouilles (13) et/ou les deuxièmes contre-dépouilles (14) et/ou les troisièmes contre-dépouilles (12) et/ou les quatrièmes contre-dépouilles (15) s'étendent sur toute la largeur ou sur une partie de la largeur des dents.

7. Dispositif d'accouplement selon l'une quelconque des revendications précédentes, **caractérisé en ce que** les faces frontales des dents de la première denture axialement périphérique (3) tournées vers les dents de la deuxième denture axialement périphérique (9) et/ou les faces frontales des dents de la deuxième denture axiale radialement périphérique (9) tournées vers les dents de la première denture axiale radialement périphérique (3) et/ou les faces frontales des dents de la troisième denture axiale radialement périphérique (5) tournées vers les dents de la quatrième denture axiale radialement périphérique (7) et/ou les faces frontales des dents de la quatrième denture axiale radialement périphérique (7) tournées vers les dents de la troisième denture axiale radialement périphérique (5) sont pourvues de pointes (11) orientées axialement.
